(19) **Europäisches Patentamt European Patent Office Office européen des brevets**

(11) **EP 4 687 083 A1**

(12) **EUROPEAN PATENT APPLICATION**

(43) Date of publication:
04.02.2026 Bulletin 2026/06

(21) Application number: 24191995.0

(22) Date of filing: 31.07.2024

(51) International Patent Classification (IPC):
*G06Q 10/04* (2023.01)   *G06Q 30/0201* (2023.01)
*G06Q 50/06* (2024.01)

(52) Cooperative Patent Classification (CPC):
**G06Q 10/04; G06Q 30/0201; G06Q 50/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventor: **HARJUNKOSKI, Iiro**
**Espoo 02200 (FI)**

(74) Representative: **Vossius & Partner**
**Patentanwälte Rechtsanwälte mbB**
**Siebertstrasse 3**
**81675 München (DE)**

(54) **DISTRIBUTION OF ENERGY CAPACITY IN A POWER GRID**

(57) The present disclosure relates to a method for determining a distribution of existing capacity of energy in a power grid across various energy markets and products, comprising: obtaining a plurality of scenarios for the various energy markets and products in the power grid with associated probabilities based on predictions of energy demand, energy production and available energy storage, estimating the distribution for a given product in one of the energy markets at a given time by selecting a scenario based on the probability of the selected scenario individually for the given product, and constraining the total volume of the distributed energy to the physical limits of the power grid, thereby optimizing the usage of the energy storage enabling larger volumes for supporting grid stability.

Fig. 1

EP 4 687 083 A1

**Description**

The present disclosure generally relates to distributing existing capacity of energy in a power grid across various energy markets and products, and more particularly to distributing energy in an auction in the energy markets and estimating the energy price for placing bids in the auction.

Due to the growing number of renewable energy source (RES) generation units, the volatility of power supply is increasing, and this may have unwanted effects both on reliability of the power grid, as well as on electricity pricing. To guarantee grid stability, there must be sufficient resources to balance for these RES-fluctuations and to ensure that the demand and supply are balanced at all times. Engaging a large fleet of, for instance, gas power plants to support the RES production increases the total cost of operation of the grid, which translates to higher electricity prices. Ideally, the grid operator should be able to trust on a continuous and constant plannable electricity supply from RES units so that they do not incur additional costs to support the network stability.

Many RES unit owners have invested in on-site battery energy storage systems (BESS) to be able to quickly balance the renewable production fluctuations both in terms of under- and overproduction of electricity and provide more stable and plannable power output. The BESS provides significant flexibility as it acts as a regulation buffer in both directions and can also support a stable start-up and shutdown of RES-facilities through controlled ramping. Nonetheless, investing in energy storage systems is expensive and this also adds to the operational costs making RES electricity production unnecessary expensive.

To support the RES/BESS coupling and justify the investments, there is the option to use the power storage for offering ancillary services, as well as participate in energy arbitrage trading.

This enables the utilization of the capacity that is not needed to support the RES generation and can optimally add to the total profit of the system owner.

However, participating in trading is not trivial due to the fluctuations in energy and ancillary prices, which - if not well considered - may result into lost opportunities or even financial losses. Having a perfect energy price forecast would make it trivial to optimize the BESS capacity usage through a deterministic optimization approach and achieve additional profits, which could then simultaneously lower the RES generation cost, as well as support the power grid through ancillary services.

Unfortunately, in real life there exist no perfect energy price forecast and the best one can do is to try to define and use for instance a quantile price forecast or define probabilistic scenarios expressing the uncertainty range of the expected price fluctuations. There are many options to deal with optimization under uncertainty such as stochastic and robust optimization. However, a rigorous multi-stage stochastic optimization problem would result in far too many variables to deal with (combinatorial explosion).

The present disclosure thus aims at an improved distribution of existing capacity of energy in a power grid in order to ensure grid stability. The present disclosure creates a method that investigates the stochastic nature of a planning process (e.g. energy trading) and simplifies the scenario handling, resulting into a non-rigorous but more efficient way to solve such problems. The present disclosure is able to improve the solution robustness (not violating the battery limits), and thereby allows increasing the profit (ensuring better return-on-investment for BESS), providing an incentive to install additional systems that improve the grid stability.

For solving this problem, the present disclosure provides a method, a computer program product and a device for determining a distribution of existing capacity of energy in a power grid across various energy markets and products, as defined in the independent claims. The dependent claims describe embodiments of the present disclosure.

In particular, the method according to the disclosure includes the steps of obtaining a plurality of scenarios for the various energy markets and products in the power grid with associated probabilities based on predictions of energy demand, energy production and available energy storage and estimating the distribution for a given product in one of the energy markets at a given time by selecting a scenario based on the probability of the selected scenario individually for the given product. By selecting a scenario individually for a given product, it is possible to handle the problem that otherwise would be very large and difficult to handle. The total volume of the distributed energy is then constrained to the physical limits of the power grid, thereby optimizing the usage of the energy storage. This enables the installation of larger volumes of BESS, supporting and improving the stability of the grid.

Various embodiments may preferably implement the following features:
Preferably, the distribution for a plurality of the products in the markets of the power grid is estimated in parallel.

Preferably, the production of energy in the power grid includes renewable energy production. The prediction of energy production and demand may accordingly consider weather forecast, such as wind and sunshine hours, capacity of energy storage facilities and time of day, parameters relevant in the field of renewable energies.

Preferably, the markets in which the energy is traded include day ahead markets and intraday markets. The products typically include energy, regulation and reserve types. The energy traded in the energy markets may be electricity.

Typically, the existing capacity is distributed in the energy markets at a given time by placing bids in an auction.

The bids may include price and power and/or volume of energy to be traded at the given time. The total volume of the bids in the products and markets accordingly is constrained by the physical limits of the system.

In order to reflect this specific energy exchange in energy markets, the scenarios may include the price of the products in the energy markets, wherein the price of the product estimated in the selected scenario is used when placing the bids. The bids may include bids for selling and/or buying energy.

After clearing an auction in the energy markets, the scenarios may be newly obtained, thereby taking into account the outcome of the auction. The scenarios thus may be newly obtained based on the amount of energy sold and/or bought in the auction.

In order to constrain the total volume of the distributed energy to the physical limits of the power grid, the total volume of the bids to be placed at a given time may be constrained by the estimated energy production and/or amount of the energy stored in the energy storage.

With the method of the disclosure, the usage of energy storage may be optimized for supporting maintaining the grid stability.

The present disclosure further provides a computer program product comprising instructions which, when the program is executed by a computer, cause the computer to carry out the steps of the method of the present disclosure as outlined above. Furthermore, a device for determining a distribution of existing capacity in a power grid in various energy markets and products, comprising a processor is configured to execute the method of the present disclosure is provided.

The present disclosure thus creates a method that investigates the stochastic nature of a planning process (e.g. energy trading) and simplifies the scenario handling, resulting into a non-rigorous but significantly more efficient way to solve such problems. With standard stochastic optimization one must create large stochastic trees which must be analyzed and solved, and this typically results in out-of-memory for already relatively small problem instances. In this proposed method, the stochastic tree is "flattened" in a way that enables several of magnitudes faster solutions and still looks for solutions using the forecasting probabilistic information. This disclosure allows the handling of real-life problem uncertainty much more efficiently and can be part of a system where uncertainty cannot be ignored.

The present disclosure will be described in more detail with reference to the Figures that show:

Fig. 1 schematically shows a system combining RES and BESS.
Fig. 2 illustrates different energy markets.
Fig. 3 shows different day-ahead price scenarios with the black solid line representing the realized market price.
Fig. 4 shows an example of a stochastic scenario tree in bidding optimization.
Fig. 5 exemplarily show three price scenarios on day-ahead and intraday energy trading.
Fig. 6 shows optimization results with the BESS SoC shown with the solar/load data for the 10-90% case.
Fig. 7 shows energy trading for the 10-90% case.
Fig, 8 shows ancillary service bids for the 10-90% case.
Fig. 9 illustrates the simplified stochastic approach according to the disclosure.
Fig. 10 shows an overview of a system that may be used for modelling and evaluating the method.

The increased ratio of renewable energy sources (RES) makes the energy supply more volatile and subject to imbalance between production and consumption. As the generation and supply must always meet, more and more flexible balancing markets are needed to cover for the non-dispatchable renewable energy generation. This, on the other hand, means that RES providers can improve their reliability by installing on-site battery energy storage systems (BESS) capacity coupled with e.g. wind or solar parks. This helps to eliminate small deviations from committed generation, as well as creates better controlled ramping curves when production either goes down or is peaking, also reducing the need to curtail RES units. There is a need for independent larger BESS capacities to compensate for the reduced inertia in the power grid, which can already be seen in some power plants and industrial sites through the installation of connected BESS systems that are used only for emergency situations.

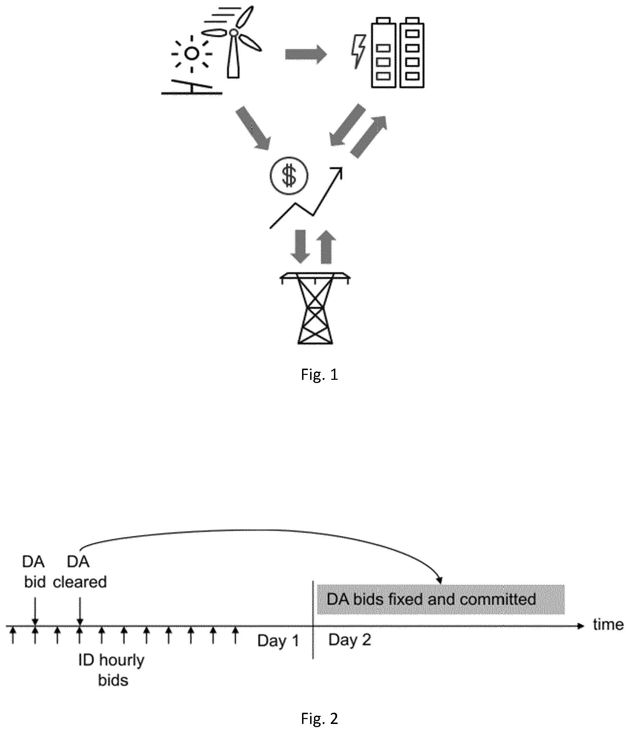

A typical system combining solar and wind generation with installed battery energy storage capacity is depicted in Figure 1. The arrows show the possible direction of electricity. The operation principle is very simple. The main options are:

• RES produce energy that is either sold to the market or used to charge the BESS (it could also be curtailed e.g. during negative electricity prices).
• BESS can either purchase energy for charging or discharge energy for selling it to the electricity markets.
• The power grid operator (transmission system operator or distribution system operator) manages the transactions based on the wholesale market conditions with the aim to keep the grid stable (mainly frequency and voltage).

Depending on the BESS and RES capacities, the combined system (Figure 1) can be seen as a much more reliable and dispatchable energy source as for instance a normal solar farm. This setup is highly beneficial from the grid point of view. However, installing additional BESS capacity is a large investment which needs to be justified. To provide an incentive for investors, it is important that BESS systems also can produce a return on investment. This can be strengthened by interacting with the different types of electricity markets, which are discussed in the following.

The most typical markets for energy trading are energy and ancillary markets (see, e.g., G. Klæboe and O. B. Fosso, "Optimal bidding in sequential physical markets - A literature review and framework discussion," 2013 IEEE Grenoble Conference, Grenoble, France, 2013, pp. 1-6). These vary substantially depending on the region by the following criteria:

- Trading day is typically defined by the calendar day, i.e., midnight-midnight but there are also many markets where the trading day starts at 3 AM or at another time point. Most products are traded for 24 hours with exceptions. Thus, this must be parameterized as it directly affects the optimization time horizon.
- Trading interval depends highly on the product and market. The most common trading interval is hourly slots for which the trading is done. But there exist markets up to 5 min intervals and the interval may also be product specific.
- Products consist mostly of energy trading in which accepted bids result into real energy transactions, as well as ancillary services that are committed but only delivered fully or partially in the case of frequency events. The network provider needs to acquire both product types in order to satisfy the load and provide network stability and these are in most cases done through auctions.
- Bids are typically composed by a price and volume pairs. Their types can also vary and in some cases the products are paid as bid and in other cases all bids are lined up and a so-called market clearing price defines the actual price of a transaction for each trading interval, which will be then used for remuneration.
- Bid submission and clearance are the points of time when a bid must be given to the network provider, after which it is considered as committed until clearance. At the market clearance, the bids have been evaluated and are either accepted or rejected. Accepted bids remain committed whereas rejected bids are ignored and the related energy is free to be planned elsewhere. Typically, the time between the bid submission and clearance is 1-2 hours.
- Rules and regulations vary heavily between various markets and can consider criteria on which markets to bid at, what bid sizes are accepted, penalties for not meeting the commitments and payment regulations. For instance, sometimes the participant gets paid for a commitment of ancillary services and in addition for the actual delivery.

These are just simplified examples to describe the environment where an automated bidding solution must provide bids that maximize the individual participant's profitability and thus motivate the investment to BESS systems. A holistic solution must be elastic and through parameterization able to be configured to different markets with the least efforts. An intelligent bidding solution can provide a balanced strategy on how to utilize the power generated by variable renewable energy sources (VRES) along the storage capacity of a BESS in both directions (charging and discharging) to provide bids to the markets that are both feasible, profitable and help to stabilize the local or regional power grids.

The different markets are also focused on a certain time of day as the simple illustration in Figure 2 shows. Day-ahead market bids are submitted at a given hour to secure the energy supply and possibly ancillary service capacities for the following market day. At the time of the clearance, typically 1-2 hours after bid submission, the market participants know whether their bids for the following day were accepted or rejected. In contrast, as the day-ahead markets for today have already been fixed the day before, intraday markets are more dynamic and act as correcting measures to ensure that forecast deviations, unplanned consumption and production of energy are considered and compensated. Typically, trading volumes in intraday markets are much lower than in the day-ahead markets, but the price volatility can be higher.

Finally, it can be concluded that most markets follow a similar procedure by collecting all supply and demand bids and sorting them based on price and volume. The point, where the supply and demand curves meet, defines the market clearing price and volume. In general, this bidding scheme has been designed for traditional dispatchable thermal generation units and one can question whether a different trading model could be more functional and effective for the VRES dominated markets, where the uncertainty plays a significant role.

The main products that a BESS owner can bid at are energy and ancillary service products. To be able to place bids, the BESS owner must be qualified for market participation and the rules on this vary across markets. Also, detailed rules on how to bid, i.e., bidding and clearance time points, minimum bid volumes, granularity of both acceptable price and volume levels, as well as limits of price levels are all market-specific, as already discussed above.

The main distinction between products is defined by if they are energy trading products or ancillary services. Accepted bids on day-ahead and intraday energy trading products result in direct energy transactions, which for a pure BESS system means charging or discharging the battery. Therefore, the battery limitations are critical in maintaining the practical feasibility of the system. The main motivation for energy trading products is energy arbitrage, in other words, to benefit from the price differences and thus buy electricity when it is cheap and sell it back when the prices are high. Here the two most important factors must be considered:

- Buying and selling bids must be balanced, since if buy bids are accepted and sell bids rejected, the battery may fast run out of its feasible state of charge min/max limits, which results in failed operations and possible penalties or even exclusion from the markets.

- Frequent charging and discharging cycles may reduce the battery life and if this is the case, it should be also considered in the planning of battery operations. In practice, this may be somewhat difficult as there are also unexpected situations that cannot be planned for, e.g., failure of assets.

Ancillary service products reserve capacity for covering any frequency events occurring during the day and these are typically classified depending on the frequency deviation (e.g., 0.1 and 0.25 Hz). The grid operator must ensure that sufficient ancillary service capacity is available for all products, and they are also priced differently depending on the expected likelihood of an event, as well as the bid offers. Here there is no balancing between sell and buy bids as all bids are services sold - even if the case of an ancillary event, electricity may be charged or discharged. Instead, the bids are accepted in the order of price (lower to higher) until the necessary capacity is met to secure the power grid.

Note the difference between frequency regulation, which is continuously used to keep the frequency within +/- 0.1 Hz limits. Ancillary services are typically defined with the power and maximum duration - often with certain ramping requirements and they only "kick-in" in case the regulation is uncapable of maintaining the frequency. In some markets, this typically only happens maximally 1-2 times per trading day and the selection of which units are called for can vary from "rotating", merit-order to some more complex principles. Nonetheless, the actual electricity delivered depends on the frequency deviation and duration of the frequency event and these are often automatically controlled by automatic generation control (AGCs). To summarize:

- Ancillary services are only sold, regardless of the direction - e.g. negative services lowering the frequency results into charging of BESS and positive services for raising the frequency results into discharging of BESS.
- The actual commitment is about the readiness to provide a certain power (MW) for a specified duration (the power can be in both directions). If an ancillary event takes place, the corresponding energy (MWh) is maximally the committed power multiplied by the maximum duration, which depends on the event. Thus, it is impossible to a *priori* predict the actual energy transaction.

In parts of the cases, the battery capacity can be divided such that the reserved part is secured for ancillary services and the remaining energy can be used for trading. In the case of an ancillary event, the energy from the blue area is consumed. If several ancillary events occur in succeeding trading intervals, it may be that the BESS cannot deliver to promise. In this case, the intraday energy trading can be used to secure future commitments.

Another complicating factor is that some ancillary services are "pay-as-bid products", which means that the suggested bid price is being used in remuneration. This creates an interesting challenge as especially for ancillary services, bid rejections do not create an infeasibility but just contribute to lowering profits as most ancillary services are not delivered but the BESS owner gets paid only for the readiness to provide if needed.

For many products the bids are also limited to a certain number of price levels within a trading day. These are called price bands, and the bidding consists of volumes assigned to the different price levels (bins) in the price band, which can be freely defined by the bidder. For some products, one single price may be required for the entire day, which means that only one price can be used for the bids of that market day - naturally the volumes can be flexibly set. This can be considered as the most restrictive case - as also the bidding price will directly impact both acceptance and profit.

The mathematical problem definition should consider different markets and products described above. As the requirements vary strongly, a complete generic formulations cannot be provided. Instead, here the focus is on few basic equations. Assume the forecasted VRES production $X_t^{VRES}$ and local load $X_t^{load}$ predictions (MW) for each time step t of the market day. Further assume that the length of each time step is given by $\Delta_t(h)$ and the total energy buying and selling volumes (MWh) are given by $x_t^{buy}$ and $x_t^{sell}$. If the battery charging and discharging power (MW) is $x_{B,t}^{ch}$ and $x_{B,t}^{dv}$, then the energy balance over each time point t can be given by Eq. (1).

$$X_t^{VRES} \cdot \Delta_t + x_t^{buy} + \sum_{B \in BESS} x_{B,t}^{dc} \cdot \Delta_t = X_t^{load} \cdot \Delta_t + x_t^{sell} + \sum_{B \in BESS} x_{B,t}^{ch} \cdot \Delta_t \quad \forall t \qquad (1)$$

This ensures that the incoming and outgoing energy must always match. The feasibility is defined by the battery balance equation Eq. (2), where $y_{B,t}$ is the stage of charge (SoC) at each time point and the parameters $\eta_{ch,B}$ and $\eta_{dc,B}$ the charging and discharging efficiencies of battery B.

$$y_{B,t} = y_{B,t-1} + \left( \eta_{ch,B} \cdot x_{B,t}^{ch} - \frac{1}{\eta_{dc,B}} \cdot x_{B,t}^{dc} \right) \cdot \Delta_t \quad \forall t, B \in BESS \qquad (2)$$

If minimum BESS limit is $B_B^{min}$ and maximum BESS limit is $B_B^{max}$, then the limits of battery operations are given in Eq. (3).

$$B_B^{min} \leq y_{B,t} \leq B_B^{max} \quad \forall t, \ B \in BESS \qquad (3)$$

In this case the $x_t^{buy}$ and $x_t^{sell}$ variables in Eq. (1) refer to energy trading alone as the ancillary services should not be accounted in the battery balance equation (2) (unless delivered), in which case the SoC can be updated based on the true delivery (MWh). Hard limits in Eq. (3) may also result into infeasibility so these may need to be adapted after an ancillary event.

The simplest objective function to be maximized is shown in in Eq. (4).

$$\sum_{mkt \in M} \sum_{p \in P} \sum_{t \in T} c_{mkt,p,t} \cdot \left( x_{mkt,p,t}^{sell} - x_{mkt,p,t}^{buy} \right) \cdot \Delta_p \qquad (4)$$

Here the sell variables in Eq. (1) are related to the ones in the objective function through the equalities (5-6)

$$x_t^{sell} = \sum_{mkt \in M} \sum_{p \in P} x_{mkt,p,t}^{sell} \quad \forall t \qquad (5)$$

$$x_t^{buy} = \sum_{mkt \in M} \sum_{p \in P} x_{mkt,p,t}^{buy} \quad \forall t \qquad (6)$$

The formulation in Eqs. (1-6) covers all the basic needs for energy trading but there are several additional constraints that need to be considered in specific cases. As the focus should be kept generic, the conceptual level will be described, and some obtained results will be given.

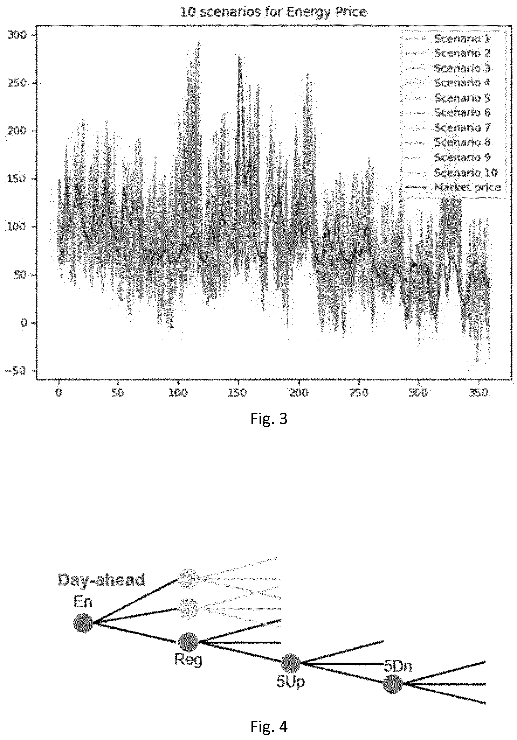

The above generic formulation can handle well a deterministic case where the obtained price forecast is reliable or representing the ground truth. This is however not often the case as electricity price forecasting is one of the most complex and studied forecasting problems. Thus, methods to deal with the price uncertainty are needed and this can be dealt with stochastic optimization (see, e.g., M. A. Plazas, A. J. Conejo and F. J. Prieto, "Multimarket optimal bidding for a power producer," in IEEE Transactions on Power Systems, vol. 20, no. 4, pp. 2041-2050, Nov. 2005). Especially, the work by E. Kraft, M. Russo, D. Keles and V. Bertsch. "Stochastic optimization of trading strategies in sequential electricity markets", European Journal of Operational Research, 308 (1), pp. 400 - 421 (2023) gives an excellent overview of the problem at hand. In the deterministic approach where there is only one point-to-point price forecast for each product / market, the problem is relatively simple. If the bid price is above / below the market clearing price, the buying / selling bids are accepted and for energy products a transaction takes place. In case, however there are periods of time where the forecasts are reliable and other times where the possible spread is very large as depicted in Figure 3, it is not trivial to place a bid that will be accepted, even more so in pay-as-bid markets. As can be observed, there are also times where forecasts cannot anticipate price peaks, e.g. around time point 150.

In this case, methods to deal with the uncertainty are required and instead of optimizing the profit as in Eq. (4), the expected profit should be maximized, which basically is based on the sum of the scenario prices multiplied by their respective probabilities. This results in a "more careful" bidding as the risk knowing the different scenario outcomes should be spread. So compared to a deterministic approach with a very reliable forecast, such a stochastic approach will never provide a better profit. On the other hand, in the presence of uncertainties, bidding more risk-aware could be advantageous, which will be illustrated in the following.

Stochastic optimization approaches are typically used to handle uncertainties, which are modeled using Mixed Integer Linear Programming (MILP) formulations including the given scenarios along their probabilities. Often a two-stage stochastic optimization is used but in the bidding problem it is often required to simultaneously consider multiple markets and products. This is true especially for the day-ahead products, which in some cases must be co-optimized in order to ensure an optimal distribution of the available energy volume. Considering multiple products and markets leads to a very large search tree, resulting into a combinatorial explosion, i.e. a model size that cannot be solved fast enough -even failing to find a first feasible solution.

An example of such an explosion can be seen in Figure 4, which shows a simplified example of first having three scenarios of the energy price forecasts, one of which would be expected to realize, then the same for the price of regulation and two ancillary services. In short, a rigorous approach would need to model all the scenario combinations diving down the tree and at the far right all scenario realization combinations that forms the bidding variables would be considered. Taking the concrete example in Figure 3 with 10 scenarios and assuming in total 4 products (energy + 3 ancillary services), each bid into 2 markets would result in $10^{4*2=8}$ = 100,000,000 (100 million) bidding variables per time step, which basically makes any MILP modeling approach intractable. Note that each product and market pair need their own forecast scenarios, e.g. energy forecast for day-ahead market is different from the intra-day one. Typical approaches to manage the size are e.g. to reduce the number of scenarios, perform a stepwise optimization starting with the most valuable products or temporal decomposition.

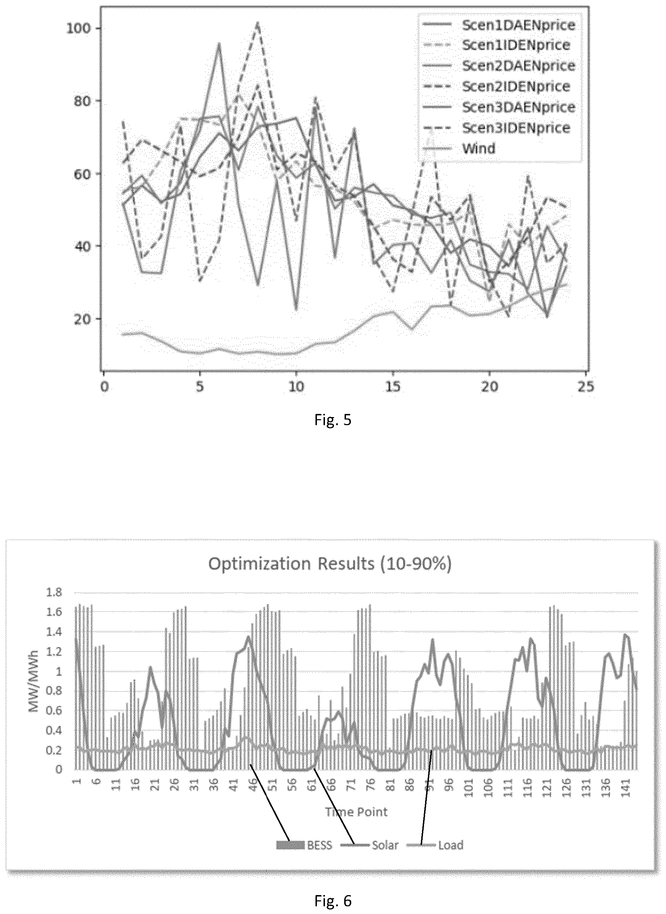

The following simple example is for illustration only. Assume three scenarios on energy price both on the intraday and day-ahead markets - each with the probability of 33.3% (Figure 5). It also shows a wind forecast, which must be considered in the energy balance equation (1). This raises the problem that if one trusts e.g. scenario 1 and places the bids accordingly, but scenario 3 actually realizes, many of the bids would be rejected and this would easily result in excess buying or selling violating the energy balance in Eq. (1) due to BESS limits. To avoid any feasibility problems, resulting from the fact that e.g. selling bids are accepted but buying bids rejected, so called self-scheduling can be used, i.e. offer sufficiently low selling price and high buying prices (e.g. 0 and 150) such that it is known that all scenarios will be accepted. In the end, the realized energy market prices will form the market clearing price that is used for trading and in case of a small player, i.e. a "price-taker', this approach is relatively acceptable - although not recommended in general as the bidding price should reflect the true generation costs.

In this hypothetical example, for robustness purposes it may be tested what the result would be if any of the three scenarios realized (defining the market clearing price). Naturally, if using only one scenario is optimized as a deterministic problem and the same scenario realizes, the profit will be maximum. However, if another scenario is realized, then the profit may be significantly worse as the bid volumes were spread in a non-optimal way assuming wrong prices. Thus, taking the deterministic approach, always one of the three scenarios should be selected, optimize the bidding problem, fix the results, and test the bidding recommendations on the two other possible scenarios to see how robust our solution is with respect to profit and uncertainty. Using the proposed simplified stochastic optimization approach, all three scenarios are considered simultaneously and one single "balanced" bid strategy is produced across all scenarios, which gives the expected profit. These can then be tested across the individual scenarios, again assuming that one of them would realize. The results of this comparison is shown in Table 1, where the first row shows how the stochastic bidding strategy (one solution) performs across the three scenarios. The remaining rows compare the same for each deterministic result based on only one scenario. The best solution is highlighted in boldface.

Table 1. Comparing stochastic vs. Deterministic approaches

| Model | Scenario 1 | Scenario 2 | Scenario 3 |
|---|---|---|---|
| Stochastic | 29078 | 37676 | 66241 |
| Deterministic 1 | **38446** | 30091 | 16491 |
| Deterministic 2 | 27290 | **42218** | 52809 |
| Deterministic 3 | 18114 | 30688 | **72622** |

The example was solved using a full bidding model and the shown optimization results confirms the following statements:

- The deterministic approach is always and naturally the best if considered scenario realizes 1:1.
- If the deterministic approach bids used the false scenario the lost potential profit can be high, as seen on the last row if the first scenario realizes (only 24% profit compared to scenario 3).
- The stochastic scenario is never the best but here always the next best. It has an expected profit of 44332, which is higher than for the other approaches (here the average of a row).

From the example it can be concluded that a stochastic approach provides more robustness but can never be 100% optimal as it will produce more conservative bids. For a true comparison a real case with true uncertainties is needed to actually prove the value of the more complex stochastic approach. This is done in the following, which is based on real price and forecasting data, as shown in Figure 3.

In the following, the results of the simplified stochastic approach according to the present disclosure will be presented, applied on a real problem, which would not be solvable by any rigorous stochastic optimization approach. The example problem has a system very similar to the one depicted in Figure 1. It has hourly bidding and three markets: two for ancillary services (AS#) and one for energy (EN). The products are EN, AS1, AS2 and AS3. There is an installed BESS capacity of 2 MWh, with SoC-limits between 10-95%. Also, the hourly solar forecast is between 0 and 1.37 MW and the hourly load that must be met varies between 0.15 and 0.33 MW. The forecast is extracted from quantile forecasts using random sampling and always includes 10 scenarios per product/market. It is assumed that each forecast has the same 10% probability.

The complexity of this example is very high. The bids to the markets need to be provided at different times so when optimizing the first one, all products and markets must be considered simultaneously in order to make an optimal volume distribution to maximize the expected profit. This results in a maximum of $10^{3*2+1=7}$ = 10,000,000 scenario combinations, which for a complete stochastic tree would require 240 million bidding variables. This would make even the modelling step impossible (out of memory in many systems). In addition, the bids must be provided as discrete numbers, i.e. using only one decimal. To show the efficiency of the simplified approach the scenarios will not be reduced but the full problem will be solved for 6 days in a rolling horizon manner (basically one day at a time). Due to the problem size, there is no possibility to compare the resulting values to a rigorous stochastic optimization approach. Instead, the deterministic problem will be calculated with the true market clearing prices (perfect forecast or ground truth) to find the global optimal solution to the problem. Then, the same problem is optimized using the forecasts that are based on different quantiles and the results are compared to the best possible outcome. The results are displayed in Table 2.

*Table 2. Optimization results* for a *realistic example problem (6 days)*

| Quantiles | Exp. Profit | Profit | Sol. time | Bids accepted | Bids rejected | Accept ratio | Optimality |
|-----------|-------------|--------|-----------|---------------|---------------|--------------|------------|
| DET | 38979.64 | 38839.3 | 107 | 270 | 0 | 100% | 100% |
| 0-100% | 26932.45 | 30849 | 148 | 265 | 0 | 100% | 79% |
| 10-90% | 26951.74 | 31191.92 | 116 | 270 | 2 | 99% | 80% |
| 20-80% | 26360.86 | 30801.32 | 148 | 265 | 8 | 97% | 79% |
| 30-70% | 25847.74 | 30025.45 | 182 | 241 | 25 | 91% | 77% |
| 40-60% | 24595.89 | 29071.27 | 176 | 204 | 54 | 79% | 75% |
| 50-50% | 24222.13 | 28860.25 | 178 | 205 | 62 | 77% | 74% |

From the above results it can be seen that clearly the deterministic (DET) approach is solved fastest and provides the maximum possible profit. When running the optimization problems based on the given forecasts and then post-processing the bids at their realistic market clearing times, which includes either rejecting or accepting a bid, the true profit for all runs can be determined. It can be seen from the results that:

- Acceptance rates reduce along reducing the included quantiles, which can be expected as the bidding becomes more "aggressive" with fewer quantile distributions.
- Profit in all cases is relatively good; the best profit of about 80% optimal is obtained by including quantiles 10-90%.
- All problems are solved within 3.5 minutes, which is acceptable for such a complexity.

In this case, the solar production is about twice the load, which results into excess energy to be stored or sold. This allows keeping the BESS SoC at levels which are favourable for distributing the energy in the power grid of improving its stability, in particular by bidding a large base of ancillary services. In Figure 6, the SoC of the batteries are shown as bars and the lines show the momentary solar generation and the permanent load level.

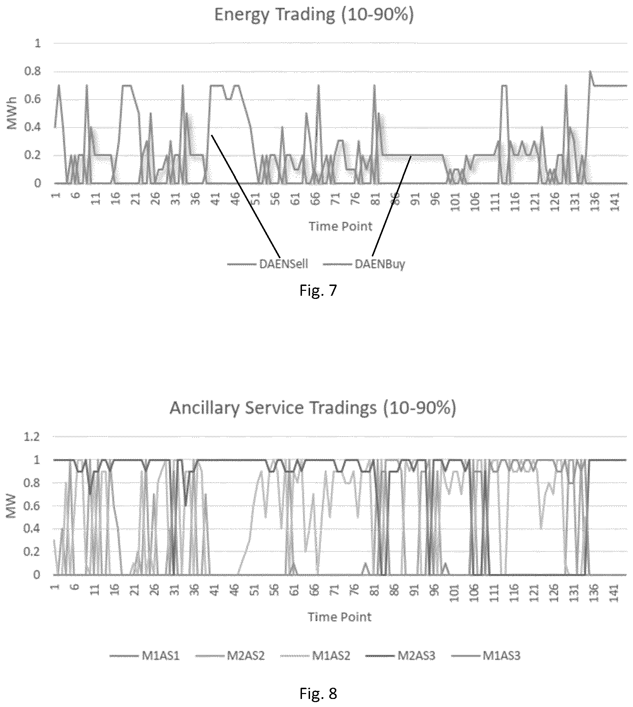

In this example, energy trading was done through self-scheduling to secure the BESS feasibility. The corresponding energy trading activities are shown in Figure 7. It can be seen that due to the solar production energy selling dominates. At the end energy can be sold to bring the battery back to the initial 50% SoC level.

Ancillary service trading decisions are shown for the same case in Figure 8. These graphs show the accepted bid volumes and it can be seen that AS3 dominates for M2, which means that the profitability of this product / market combination is highest. During these six days, the revenues from ancillary services is about 95% of the total revenues and about half of it comes from AS3 sold at M2. These products support lowering the frequency.

The results show the power of the novel simplified stochastic optimization approach. It can solve a six-day problem within few minutes, however in a rolling horizon manner, and more than 48 hours are never optimized in one optimization run. The quality of these examples is good, as the best solutions are about 80% optimal.

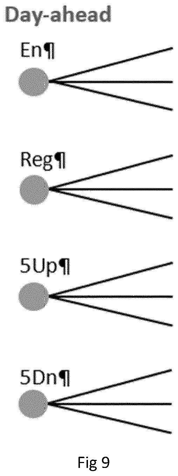

To overcome the large combinatorial explosion, the present disclosure thus flattens the forecasting scenarios per product. Instead of the rigorous modelling as shown in Figure 4, the proposed method treats all markets separately but in parallel as indicated in Fig. 9. This will heavily reduce the combinatorial complexity from the above 100 million to 160 variables, which makes it possible to formulate different mathematical models for considering the problem.

The resulting treatment of uncertainty allows to model the problem mathematically and solve the problem in a way that is closer to the single-point forecast approach, but which takes into account the uncertainty and produces close-to-optimal solutions within a reasonable time.

With the above simplification and method to treat the uncertainty, the problem can be modelled, and the different decisions can be related together through assuming that each of the branches for a product will result in a decision on how the energy may best be distributed. For example, the result may be one bidding decision, which can then be used to balance with other product bids. How to reach the optimal distribution, and the most profitable solution is done using stochastic programming, i.e. the expected profit may, e.g., be optimized, which basically is the sum of the prices at each scenario, multiplied by their probabilities. This combination of stochastic and robust optimization (robust, because constraints for all scenarios that must be satisfied are formulated separately), results typically in about 70% optimality, whereas just taking a random forecast might result in grid instability, and may even result in significant losses (negative profits). Optimality may be evaluated by afterwards calculating what the best decisions would have been if all prices had been known perfectly in advance (i.e. having a "crystal ball").

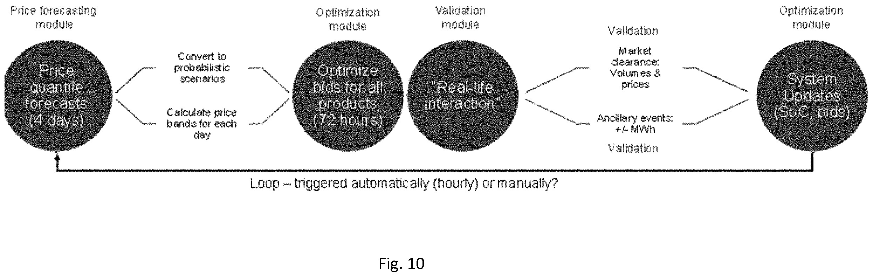

An overview on how the entire system works is shown in Fig. 10. First, a set of forecasts is prepared for a given number of days (at least for the targeted trading intervals). If the forecast is given as quantile forecasts, they have to be converted to probabilistic scenarios that can be mathematically modeled. Also, based on the forecasts, price bands which are used for the bidding process will be calculated. In many cases, one can only bid on a limited number of price levels and these price bands are used to allow the mathematical model to suggest different price alternatives to maximize the likelihood of a bid getting accepted. The optimization model is build based on the simplification idea described above and solved. As a result, the bids are suggested (both price and volume) and in a validation module (in real life, this is the actual market clearance). The suggested bids will be evaluated with the market clearing price, and either accepted or rejected. Also, it is possible to interact with the system in case there were some frequency events (often likelihood can be around 5%), corrections may need to be made on the battery stage of charge levels. After the updates the system continues at the next time step and performs the optimization runs necessary for the markets to be bid. In that way, results as shown above in Table 2 can be obtained.

It can be seen that the simplification allows using mathematical programming that could by considering the entire forecasting window (all quantiles from 0 to 100%) provide a bidding strategy that is 79% "optimal". This is just an example to illustrate that it is possible to within a few minutes (148 sec) solve the bidding problem using mathematical programming. The column "Bids accepted" shows how many of the bids were accepted and the next column how many were rejected. The ratio shows the percentage of accepted bids which measures the goodness to evaluate the price variations. Of course, the optimality is the most interesting column as it shows how close the result is to the theoretical optimum shown in the first row (knowing the actual prices beforehand).

According to the present disclosure, rather than using a single-point forecast, a number of forecasting scenarios is used. The objective function is focused, for example on guaranteeing grid stability when distributing the available energy or, in case of distributing the energy via auctions across the energy markets, on maximizing the expected profit, that may encourage participants of the market to invest in BESS that in turn will increase the stability. The expected profit is given by the sum of all scenario prices multiplied by their probability. This approach should identify the best scenario choice under uncertainty. In a simplified approach the constraints are built for each scenario outcome: The main constraint affected is the one for the battery state-of-charge calculations, as well as the bus limitations. If the true realized price is "between" included scenario prices, the solution should be feasible. This also results in more careful bidding (lower volumes) in order to ensure feasibility, i.e. within the available energy production and, in particular, BESS storage. Since stochastic bids are generally more conservative than deterministic bids, it is better to limit the scenarios.

For improving grid stability, it is desirable to optimize the support of BESS. This may also improve the willingness to invest in those systems. Therefore, it is important to provide a way to deal with the uncertainty of forecasts, which, as discussed above, is a very complex task. The complexity particularly increases since there are many markets, and every market as its own products, structures and rules. The uncertainty makes current deterministic solutions less robust, and it is difficult to identify unified model approaches for all markets, which would make the solution re-usable and scalable. Since with an increasing number of markets, products, and forecast scenarios, the number of variables increases dramatically, typical stochastic optimization algorithms are at most able to handle two steps, i.e. can only handle two products or one product on two markets. It is therefore important to provide a new model to deal with the complexity on energy markets to optimize the usage of BESS.

The present disclosure, therefore, rather than diving through all scenario combinations, individually selects a scenario based on the probability of the selected scenario for the given product, i.e. builds a separate stochastic tree across two levels. Exemplarily, a case with 8 day-ahead products, such as Energy, Regulation and three reserve types (5, 60, 300 s, both up and down: SUp, 5Dn, 60Up, ...), each with their own price forecast information will be discussed. For each price alternative, the sum of the probabilities is 100%. The volumes to bid at a specific time can be denoted as

$x^{DA}_{\{En,Reg,5Up,5Dn\ldots\},t,\Omega}$ for the Day-ahead (DA) market and $x^{ID}_{\{En,Reg,5Up,5Dn\ldots\},t,\Omega}$ for the intra-day (ID) market. The energy balance between the products can be handled through the sum of the bidding volumes over all scenarios, e.g.

$$x^{DA}_{EN,t} = \sum_{\Omega} x^{DA}_{EN,\Omega,t}$$ .The expected profit, that may be selected as the objective function, is given as the individual bid volume variables multiplied by their respective price band probabilities. In the above example (8 products and 10 price scenarios), the number of bid variables per time step 80 (DA) + 80 (ID) =160. The total energy bid volumes for each time point is

$$x^{tot}_t = \sum_{prod} \left( x^{DA}_{EN,t} + x^{ID}_{EN,t} \right) \ \forall t$$

Nonetheless, it should be separated between selling and buying across all levels, since the prices are generally different.

With the simplified scenario handling according to the disclosure, all scenarios are thus considered in parallel in the target function, e.g. optimal grid stability or maximum expected profit. This approach is sub-optimal, due to the uncertainties of the forecasts, but possible to handle in a reasonable time.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is understood that, in the present disclosure, the term "and/or" or symbol "/" may include any and all combinations of one or more of the associated listed items. For example, A and/or B and/or C includes any and all combinations of one or more of A, B, and C, including A, B, C, A and B, A and C, B and C, and a combination of A and B and C. Likewise, A/B/C includes any and all combinations of one or more of A, B, and C, including A, B, C, A and B, A and C, B and C, and a combination of A and B and C.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, operations, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general-purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general-purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps or operations of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein but is to be accorded the widest scope consistent with the novel features and principles disclosed herein, as recited in the claims below.

## Claims

1. Method for determining a distribution of existing capacity of energy in a power grid across various energy markets and products, comprising:

   obtaining a plurality of scenarios for the distribution across the various energy markets and products in the power grid with associated probabilities based on predictions of energy demand, energy production and available energy storage,
   estimating the distribution for a given product in one of the energy markets at a given time by selecting a scenario based on the probability of the selected scenario individually for the given product, and
   determining the distribution of the existing capacity of energy based on the estimated distribution for at least one of the products by constraining the total volume of the distributed energy to the physical limits of the power grid, thereby optimizing the usage of the energy storage enabling larger volumes for supporting grid stability.

2. Method according to claim 1, wherein the distribution for a plurality of the products in the markets of the power grid are estimated in parallel.

3. Method according to claim 1 or 2, wherein the energy production includes renewable energy production.

4. Method according to any one of the preceding claims, wherein the prediction of energy production and demand considers weather forecast, such as wind and sunshine hours, capacity of energy storage facilities and time of day.

5. Method according to any one of the preceding claims, wherein the markets include day ahead markets and intraday markets.

6. Method according to any one of the preceding claims, wherein the products include energy, regulation and reserve types.

7. Method according to any one of the preceding claims, wherein the energy traded in the energy markets is electricity.

8. Method according to any one of the preceding claims, wherein the existing capacity is distributed in the energy markets at a given time by placing bids in an auction, the bids including price and power and/or volume of energy to be traded at the given time, wherein the total volume of the bids in the products and markets is constrained to the physical limits of the system.

9. Method according to claim 8, wherein the scenarios include the price of the products in the energy markets, wherein the price of the product estimated in the selected scenario is used when placing the bids.

10. Method according to claim 8, wherein the bids include bids for selling and/or buying energy.

11. Method according to any one of claims 8 to 10, wherein after clearing an auction in the energy markets, the scenarios are newly obtained taking into account the outcome of the auction, wherein the scenarios are newly obtained based on the amount of energy sold and/or bought in the auction.

12. Method according to any one of claims 8 to 11, wherein the total volume of the bids to be placed at a given time are constrained to the estimated energy production and/or amount of the energy stored in the energy storage.

13. Method according to any one of claims 8 to 12, wherein the usage of energy storage is optimized for supporting maintaining grid stability.

14. A computer program product comprising instructions which, when the program is executed by a computer, cause the computer to carry out the steps of the method of any one of the preceding clams.

15. Device for determining a distribution of existing capacity in a power grid in various energy markets and products, comprising a processor, wherein the processor is configured to execute a method according to any one of claims 1 to 13.

Fig. 1

Fig. 2

Fig. 3

Fig. 4

Fig. 5

Fig. 6

Energy Trading (10-90%)

Fig. 7

Ancillary Service Tradings (10-90%)

Fig. 8

Day-ahead

En¶

Reg¶

5Up¶

5Dn¶

Fig 9

Fig. 10

Europäisches Patentamt
European Patent Office
Office européen des brevets

# EUROPEAN SEARCH REPORT

**Application Number**

EP 24 19 1995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GASPAR INÊS ET AL: "Optimisation and economic feasibility of Battery Energy Storage Systems in electricity markets: The Iberian market case study", JOURNAL OF CLEANER PRODUCTION, ELSEVIER, AMSTERDAM, NL, vol. 324, 4 October 2021 (2021-10-04), XP086842120, ISSN: 0959-6526, DOI: 10.1016/J.JCLEPRO.2021.129255 [retrieved on 2021-10-04] * the whole document * | 1-15 | INV. G06Q10/04 G06Q30/0201 G06Q50/06 |
| X | AHSEN SYED SUBHAN ET AL: "Multi-Stage Stochastic Optimization for Battery Energy Storage Systems in the Iberian market", 2022 2ND INTERNATIONAL CONFERENCE ON ENERGY TRANSITION IN THE MEDITERRANEAN AREA (SYNERGY MED), IEEE, 17 October 2022 (2022-10-17), pages 1-6, XP034225022, DOI: 10.1109/SYNERGYMED55767.2022.9941438 [retrieved on 2022-11-11] * the whole document * | 1-15 | TECHNICAL FIELDS SEARCHED (IPC) G06Q |

The present search report has been drawn up for all claims

| Place of search | Date of completion of the search | Examiner |
|---|---|---|
| The Hague | 16 December 2024 | Moynihan, Maurice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. KLÆBOE** ; **O. B. FOSSO**. Optimal bidding in sequential physical markets - A literature review and framework discussion. *2013 IEEE Grenoble Conference, Grenoble, France*, 2013, 1-6
- **M. A. PLAZAS** ; **A. J. CONEJO** ; **F. J. PRIETO**. Multimarket optimal bidding for a power producer. *IEEE Transactions on Power Systems*, November 2005, vol. 20 (4), 2041-2050

- **E. KRAFT** ; **M. RUSSO** ; **D. KELES** ; **V. BERTSCH**. Stochastic optimization of trading strategies in sequential electricity markets. *European Journal of Operational Research*, 2023, vol. 308 (1), 400-421